# EUROPÄISCHE PATENTSCHRIFT

(11) **EP 2 878 023 B1**
(45) Veröffentlichungstag und Bekanntmachung des Hinweises auf die Patenterteilung: **09.08.2017**
(21) Anmeldenummer: 13728379.2
(22) Anmeldetag: 11.06.2013
(51) Int. Cl.: H01M 4/58, H01M 4/52, H01M 2/16

(54) **ELEKTROCHEMISCHER ENGERGIESPEICHER MIT EINEM ZUSATZSTOFF**
ELECTROCHEMICAL ENERGY STORE HAVING AN ADDITIVE
ACCUMULATEUR D'ÉNERGIE ÉLECTROCHIMIQUE CONTENANT UN ADDITIF

(30) Priorität: 26.07.2012 DE 102012213175; 06.09.2012 DE 102012215824
(43) Veröffentlichungstag der Anmeldung: 03.06.2015
(73) Patentinhaber: SCHOTT AG, 55122 Mainz (DE)
(72) Erfinder: KUNZE, Miriam, 31535 Neustadt am Rübenberge (DE); PEUCHERT, Ulrich, 55294 Bodenheim (DE); CLAUSSEN, Olaf, 55278 Undenheim (DE); DAHLMANN, Ulf, 84034 Landshut (DE); EIDEN, Ralf, 55122 Mainz (DE); BIEDENBENDER, Sylvia, 55411 Bingen (DE); ROTERS, Andreas, 55118 Mainz (DE); ROEMER-SCHEUERMANN, Gabriele, 55218 Ingelheim (DE); SCHUHMACHER, Joerg, 70806 Kornwestheim (DE)
(74) Vertreter: Witte, Weller & Partner Patentanwälte mbB
(86) Internationale Anmeldenummer: PCT/EP2013/062049
(87) Internationale Veröffentlichungsnummer: WO 2014/016039

(56) Entgegenhaltungen:
- WO-A1-2011/124347
- WO-A2-2012/045514
- WO-A2-2012/045662
- DE-A1-102009 056 756
- JP-A- 2005 011 614
- US-A1- 2006 292 446
- MYUNG S T ET AL: "Improvement of cycling performance of Li1.1Mn1.9O4 at 60<o>C by NiO addition for Li-ion secondary batteries", ELECTROCHIMICA ACTA, ELSEVIER SCIENCE PUBLISHERS, BARKING, GB, Bd. 51, Nr. 26, 15. August 2006 (2006-08-15), Seiten 5912-5919, XP028027574, ISSN: 0013-4686, DOI: 10.1016/J.ELECTACTA.2006.03.029 [gefunden am 2006-08-15]
- MYUNG,S.T. ETAL: "Role of Alumina Coating on Li-Ni-Co-Mn-O Particles as Positive Electrode Material for Lithium-Ion Batteries", CHEM.MATER., Bd. 17, 1. Januar 2005 (2005-01-01), Seiten 3695-3704, XP002714411,
- PARK ET AL: "Improvement of structural and electrochemical properties of AlF3-coated Li[Ni1/3Co1/3Mn1/3]O2 cathode materials on high voltage region", JOURNAL OF POWER SOURCES, ELSEVIER SA, CH, Bd. 178, Nr. 2, 3. März 2008 (2008-03-03), Seiten 826-831, XP022509834, ISSN: 0378-7753, DOI: 10.1016/J.SCRIPTAMAT.2007.12.031
- LARA C ET AL: "Sintering of glasses in the system RO-Al2O3-BaO-SiO2 (R=Ca, Mg, Zn) studied by hot-stage microscopy", SOLID STATE IONICS, NORTH HOLLAND PUB. COMPANY. AMSTERDAM; NL, NL, vol. 170, no. 3-4, 31 May 2004 (2004-05-31), pages 201-208, XP004515922, ISSN: 0167-2738, DOI: 10.1016/J.SSI.2004.03.009

## Beschreibung

Die vorliegende Erfindung betrifft einen elektrochemischen Energiespeicher mit einem Zusatzstoff.

Energiespeicher bzw. Zusatzstoffe, die insbesondere Glaspulver enthalten, sind beispielsweise aus folgenden Schriften bekannt: DE 10 2009 056 756 A1, WO 2011/124347 A1, WO 2012/045514 A2, WO 2012/045662 A2, DE 10 2011 914876.4, JP 2005-11614 A. Glashaltige Brennstoffzellen sind in Lara et al., Solid State lonics 170 (2004) 201-208 beschrieben. US 2006/0292446 A1 bzw. US 7,655,358 B2 beschreiben eine wiederaufladbare Lithiumbatterie mit einer positiven Elektrode, die als positiv-aktives Material eine lithiumhaltige Übergangsmetallverbindung und einen Zusatzstoff enthält. Der Zusatzstoff umfasst wenigstens elementares Si, B, Ge, Ga, Mg, Ca, Sr, Ba oder wenigstens ein Oxid dieser elementaren Stoffe. Laut diesen Schriften reagieren die Elemente oder die Oxide dieser Elemente mit in der Batterie unerwünschtem HF. So reagiert SiO₂ mit HF zu H₂SiF₆ und die Erdalkalimetalloxide (RO) reagieren mit HF zu Erdalkalimetallfluoriden (RF₂).

Zukünftige Energiespeicher, z.B. Lithium-Ionen-Akkumulatoren für mobile oder stationäre Anwendungen, erfordern eine Verbesserung der Energiespeicher im Hinblick auf deren Sicherheit, Kosten und Gewicht, letzteres mit Blick auf eine Erhöhung der spezifischen Energie- bzw. Leistungsdichte.

Auch die Lebensdauer insbesondere von Lithiumionen enthaltenden Energiespeichern sowohl im Betrieb (Lade- bzw. Entladevorgänge) als auch während der allgemeinen Standzeit (kalendarische Lebensdauer) spielt eine wichtige Rolle. Die Lebensdauer beeinträchtigende Effekte sind, neben vielen anderen, beispielsweise die zunehmende Bildung einer Oberflächenschicht auf der Anode (Solid Electrolyte Interphase (SEI)) mit der Konsequenz zunehmender Lithium-Defizienz und Erhöhung des internen Widerstandes.

Weiterhin ist die Degradation von Energiespeichermaterialien oder Komponenten durch sich bildendes HF (Fluorwasserstoff) ein wesentlicher lebensdauerbeeinträchtigender Mechanismus. Die Bildung von HF hängt insbesondere vom Wassergehalt im Energiespeicher ab, wobei das Wasser mit fluorhaltigen Leitsalzen reagiert. Feuchtigkeit (Wasser) kann insbesondere während der Herstellung des Energiespeichers in diesen gelangen. Aber auch während der Betriebszeit kann, bedingt durch kleinste Undichtigkeiten, z.B. im Bereich der polymerführenden Kontaktdurchführung, Feuchtigkeit schleichend in den Energiespeicher eintreten.

Diese wie viele andere störenden, insbesondere chemischen und elektrochemischen Vorgänge werden in der Regel durch Zugabe von Zusatzstoffen, z.B. zum Flüssigelektrolyten eines Energiespeichers, z.B. einer Lithium-Ionen-Zelle, minimiert (Tieftemperatur-Zusatzstoffe, SEI Formation Enhancer bzw. Controller, Flammschutzmittel, Benetzungsmittel, Anionenrezeptoren, Überladungsschutzadditive, Wasser- bzw. Säurefänger, Zusätze zur glatten Lithium-Abscheidung etc.). Hinter den Zusätzen stehen fast ausschließlich organische, aromatische oder metall-organische Verbindungen, welche oft Halogene oder Schwefel enthalten. Diese sind daher oftmals toxisch, zudem teuer und häufig aufgrund fehlender Temperaturbeständigkeit leicht ent-flammbar.

Ein weiterer Nachteil ist die fehlende Flexibilität der Integration der bislang bekannten Zusatzstoffe in bestehende Energiespeicher. In Form einer Flüssigkeitskomponente oder in Form eines nicht beschichtbaren, im Elektrolyt sofort und komplett löslichen Festkörpers ist es bei Bedarf nicht möglich, die Wirkung lokal zu entfalten.

Ein Beispiel hierfür ist der Einsatz eines prozessierbaren Festkörper-Funktions-Zusatzstoffes zum lokalen Schutz eines HF- und wasserempfindlichen Kathodenmateriales wie LiMn₂O₄ (LMO) vor HF und Wasser. Hierzu wird NiO oder auch ZnO zugesetzt. Dieses lässt sich wahlweise durch Beschichtung der Elektrodenpartikel oder der gesamten Elektrode bzw. durch Beimengung zum Kathodenmaterial in den Verbund integrieren.

Aus Myung, S.T. et al., "Improvement of cycling performance of Li1.1Mn1.9O4 at 60 °C by NiO addition for Li-ion secondary batteries", Electrochimica Acta 51 (2006) Seiten 5912-5919, ist es bekannt, ein mit NiO gemischtes Spinell-artiges Li_{1.1}Mn_{1.9}O₄ als Zusatzstoff bei Lithium-Ionen-Akkus zu verwenden, um ein HF-Gettering zu erreichen.

Ferner ist es aus Myung, S.T. et al., "Role of Alumina Coating on Li-Ni-Co-Mn-O Particles as Positive Electrode Material for Lithium-Ion Batteries", Chem. Mater. 2005, Bd. 17, Seiten 3695-3704 bekannt, mit Al₂O₃ beschichtete Li-Ni-Co-Mn-O-Partikel als Zusatz in Lithium-Ionen-Akkus zu verwenden, um ein HF-Gettering zu unterstützen.

Schließlich ist es aus Park, B.C. et al., "Improvement of structural and electrochemical properties of AlF3-coated Li[Ni1/3Co1/3Mn1/3]O2 cathode materials on high voltage region", Journal of Power Sources 178 (2008), Seiten 826-831, bekannt, das Kathodenmaterial aus Li[Ni_{1/3}Co_{1/3}Mn_{1/3}]O₂ in Lithium-Ionen-Akkus mit AlF₃ zu beschichteten, um die Stabilität zu verbessern.

Die oben genannten Zusätze haben jedoch den Nachteil, dass durch die hierdurch generierten Reaktionen immer Wasser entsteht, wodurch sich neue Flusssäure bilden kann.

Ausgehend hiervon ist es die Aufgabe der Erfindung, elektrochemische Energiespeicher bereitzustellen, die die vorgenannten Nachteile nicht oder zumindest in geringerem Maße aufweisen. Weiterhin ist es Aufgabe der Erfindung, einen Zusatzstoff für elektrochemische Energiespeicher bereitzustellen, um die vorgenannten Nachteile zu verringern und den Energiespeicher zu verbessern.

Es ist insbesondere auch Aufgabe der Erfindung, einen insbesondere nicht toxischen, temperaturstabilen Zusatzstoff zum flexiblen Einsatz in allen Bereichen einer wiederaufladbaren Lithiumionen-Batteriezelle (LIB-Zelle) bereitzustellen. Weiterhin ist es insbesondere Aufgabe der Erfindung, die Funktionalität zur Bindung (kalendarisch und unter Potentiallast) von schädlichen fluorhaltigen Verbindungen im Energiespeicher, insbesondere HF, und/oder Wasser in einer LIB-Zelle bereitzustellen. Weiterhin soll der integrierbare Zusatzstoff die Zellchemie einer LIB-Zelle nicht durch Abgabe von Oberflächenwasser schädigen.

Gelöst wird die Aufgabe gemäß Anspruch 1 durch einen elektrochemischen Energiespeicher, insbesondere eine Lithium-Ionen-Zelle, mit einer Anode, einer Kathode, einem Separator und mit wenigstens einem Zusatzstoff,
wobei der Zusatzstoff wenigstens eine silicium- und erdalkalimetallhaltige Verbindung V1 enthält, die in Kontakt mit einer fluorhaltigen Verbindung V2 im Energiespeicher wenigstens eine Verbindung V3 bildet, wobei die Verbindung V3 ausgewählt ist aus der Gruppe der silicium- und fluorhaltigen, lithiumfreien Verbindungen V3a, der erdalkalimetall- und fluorhaltigen, lithiumfreien Verbindungen V3b, der silicium-, erdalkalimetall- und fluorhaltigen, lithiumfreien Verbindungen V3c oder Kombinationen davon, wobei die Verbindung V1 ein Glaspulver ist, insbesondere ein Glaspulver, das als Glaszusammensetzungsbestandteile wenigstens ein Erdalkalimetalloxid und Siliciumdioxid enthält, wobei das Glasspulver die folgenden Glaszusammensetzungsbestandteile aufweist (in Gew.-%):

| | |
|---|---|
| SiO₂ | 15 - 75 |
| BaO | 0 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO+BaO+CaO | ≥ 20 |
| NiO | 0 - 10 |
| PbO | 0 - 10 |
| ZnO | 0 - 10 |
| F | 0 - 5, wobei das molare Verhältnis von Erdalkalimetalloxid zu Siliciumdioxid im Bereich von 0,65 bis ≤ 1,0 liegt. |

Es bildet sich also in Kontakt mit einer fluorhaltigen Verbindung V2 im Energiespeicher wenigstens eine Verbindung V3.

Die Verbindung V3 ist insbesondere eine nichtflüchtige, nicht gasförmige Verbindung, die das enthaltene Fluor sehr gut bindet (unter üblichen Einsatzbedingungen des Energiespeichers).

Im Folgenden werden bevorzugte Ausführungsformen des erfindungsgemäßen Zusatzstoffes beschrieben.

Die Verbindung V1 ist ein Glaspulver, bei dem vorzugsweise (in Gew.-%):
SiO₂ > 40 bis < 70,
MO > 30 bis < 60,
wobei M ausgewählt ist aus der Gruppe der Erdafkalimetallelemente.

Die Verbindung V1 ist vorzugsweise ein Glaspulver, das folgende Glaszusammensetzungsbestandteile aufweist (in Gew.-%) :

| | |
|---|---|
| SiO₂ | 15 - 45 |
| BaO | 10 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO+BaO+CaO | ≥ 30 |
| NiO | 0 - 10 |
| PbO | 0 - 10 |
| ZnO | 0 - 10 |
| F | 0 - 5. |

Die Verbindung V1 ist vorzugsweise ein Glaspulver, das folgende Glaszusammensetzungsbestandteile aufweist (in Gew.-%):

| | |
|---|---|
| SiO₂ | 20 - 40 |
| BaO | 40 - 80 |
| ZurO₂ | 0 - 8 |
| Li₂O | 0 - 15 |
| P₂O₅ | 0 - 15 |
| Al₂O₃ | 0 - 10 |
| CaO | 0 - 30 |
| MgO | 0 - 30 |
| MgO+BaO+CaO | ≥ 30 |
| NiO | 0 - 10 |
| PbO | 0 - 10 |
| ZnO | 0 - 10 |
| F | 0 - 5 |

Die Verbindung V3a oder die Verbindung V3c enthält vorzugsweise [SiF₆]²⁻-Gruppen.

Die Verbindung V3b oder die Verbindung V3c enthält vorzugsweise MSiF₆, wobei M wenigstens ein Erdalkalimetallelement ist, insbesondere Barium.

Die Verbindung V3b oder die Verbindung V3c enthält vorzugsweise MF₂, wobei M wenigstens ein Erdalkalimetallelement ist, insbesondere Barium.

Die Verbindung V3 bildet sich vorzugsweise an der Oberfläche der Verbindung V1.

Der Zusatzstoff ist vorzugsweise Bestandteil einer Elektrode, eines Elektrolyten oder eines Separators eines Energiespeichers.

Der Zusatzstoff enthält vorzugsweise wenigstens eine silicium- und erdalkalimetallhaltige Verbindung V1, die in Kontakt mit HF im Energiespeicher wenigstens die Verbindung V3 bildet.

Im Folgenden werden bevorzugte Ausführungsformen des Energiespeichers beschrieben.

Der Zusatzstoff in Kontakt mit einem Elektrolyten des Energiespeichers weist bevorzugt wenigstens eine der folgenden drei Eigenschaften auf:
- bessere Bindung von HF,
- bessere Bindung von H₂O,
- geringere Abgabe von H₂O,
im Vergleich mit einem Al₂O₃-Pulver in Kontakt mit dem Elektrolyten und bei gleicher mittlerer Korngröße von Al₂O₃-Pulver und einem Pulver aus dem Zusatzstoffpulver. Bevorzugt enthält der elektrochemische Energiespeicher ein Glaspulver, das alle drei Eigenschaften aufweist.

Die bessere Bindung von HF, die bessere Bindung von H₂O oder die geringere Abgabe von H₂O ist bevorzugt mittels Cyclovoltammetrie qualitativ ersichtlich.

Es wird also die HF-Eigenschaft bzw. bevorzugt zusätzliche H₂O-Eigenschaften eines Glaspulvers mit den entsprechenden Eigenschaften eines Al₂O₃-Pulvers verglichen, wobei beide Pulver eine vergleichbare mittlerer Korngröße aufweisen und die drei Eigenschaften unter vergleichbaren Bedingungen bestimmt werden. Die bessere Bindung von HF und die bessere Bindung von H₂O beruhen vermutlich auf einer besseren chemischen Bindung dieser Stoffe durch das geeignete Glaspulver als durch das vergleichbare Al₂O₃-Pulver. Die geringere Abgabe von H₂O beruht vermutlich auf einer besseren Adsorption von H₂O im Flüssigelektrolyten durch das Glaspulver als durch das vergleichbare Al₂O₃-Pulver.

Wenigstens eine der drei Eigenschaften des Zusatzstoffs verbessert sich bevorzugt zeitabhängig, insbesondere in einem Zeitraum von bis zu 2 bis 5 Tagen nach Kontakt des Zusatzstoffes, insbesondere des Glaspulvers, mit dem Elektrolyten. D.h. dass sich beispielsweise die bessere Bindung von HF im Laufe der Zeit ab Fertigstellung des Energiespeichers nach und nach verbessert, es wird also zunächst wenig HF gebunden und dann im Laufe der Zeit mehr.

Der Elektrolyt ist bevorzugt ein nicht-wässriger Elektrolyt, ein Elektrolyt auf Basis carbonatischer Lösungsmittel und/oder der Elektrolyt enthält bevorzugt mindestens LiPF₆ als ein Leitsalz.

Bevorzugt ist der Energiespeicher eine Lithium-Ionen-Zelle.

Bevorzugt enthält der Energiespeicher eine Anode, eine Kathode und einen Separator. Überraschenderweise hat sich gezeigt, dass durch diese einfachen Maßnahmen wesentlich bessere elektrochemische Energiespeicher erhalten werden.

Der Begriff elektrochemischer Energiespeicher im Sinne der Erfindung umfasst Primär- und Sekundär-Batterien, Akkumulatoren, Lithium-Ionen-Zellen, Lithiummetall-Zellen und Kondensatoren. Bevorzugt sind dabei wiederaufladbare LithiumIonenzellen.

Der Begriff Glaspulver im Sinne der Erfindung umfasst Glaspulver und/oder Glaskeramikpulver.

Der Begriff fluorhaltige Verbindung V2 umfasst HF.

Der Begriff HF im Sinne der Erfindung umfasst HF, Fluor und Fluoridionen.

Der Begriff lithiumfreie Verbindung im Sinne der Erfindung bedeutet, dass die Verbindung bis auf unvermeidliche Spuren frei von Lithium ist, bevorzugt enthält die lithiumfreie Verbindung kein Lithium. Letztendlich geht es darum möglichst kein Lithium des Energiespeichers in der Verbindung V3 zu demobilisieren.

In einem bevorzugten elektrochemischen Energiespeicher bildet das Glaspulver in Kontakt mit dem Elektrolyten eine im Elektrolyten schwerlösliche Si-F-Verbindung und bindet so HF besser.

In einem weiteren bevorzugten elektrochemischen Energiespeicher enthält das Glaspulver als Glaszusammensetzungsbestandteil SiO₂ und wenigstens ein Erdalkalimetalloxid der allgemeinen Formel MO, mit M = Mg, Ca, Ba, Sr, und bildet in Kontakt mit dem Elektrolyten eine im Elektrolyten schwerlösliche Si-F-Verbindung der allgemeinen Formel MSiF₆, vorzugsweise BaSiF₆, und bindet so HF besser. Auch Mischkristallphasen mit mehr als einem Erdalkaliion sind zielführend und nutzbar.

Die Bildung des schwerlöslichen Fluorids wird nicht zwingend aber bevorzugt an der Oberfläche der Glaspulverpartikel erfolgen. Alternativ ist auch die Bildung von feinsten Kolloiden der schwerlöslichen Fluorid-Phase im Elektrolyt denkbar.

Die bessere Bindung von HF im elektrochemischen Energiespeicher kann als eine denkbare Möglichkeit wie folgt erklärt werden:
Das Glaspulver wird im Herstellprozess gezielt so eingestellt, dass die für die Getterwirkung besonders wichtigen Erdalkalimetallionen, bevorzugt Barium-ionen, an der Oberfläche der Glaspartikel angereichert sind und im Kontakt mit dem Elektrolyten aus der Oberfläche der Glaspartikel in den Elektrolyten übergehen und hierzu einer schwerlöslichen fluorhaltigen Verbindung reagieren können. Bei diesen Reaktionen wird Wasser verbraucht und steht so dem System nicht zur Bildung weiterer HF zur Verfügung, was die Lebensdauer des Energiespeichers ebenfalls positiv beeinflusst.

Dadurch, dass die Erdalkalüonen an der Oberfläche der Glaspulverpartikel angereichert sind, sind sie in der Lage, zusätzlich auch Wasser zu binden und so zusätzlich dem System zu entziehen. Im Idealfall kann so die Bildung von HF über die Reaktion des Leitsalzes mit Wasser komplett unterbunden werden. Vorzugsweise ist der elektrochemische Energiespeicher eine wiederaufladbare Lithium-Ionen-Zelle.

Bei einem weiteren bevorzugten elektrochemischem Energiespeicher ist das Glaspulver Teil eines Separators des Energiespeichers, insbesondere ein Füllstoff und/oder eine Beschichtung eines Separators und/oder Teil einer Elektrode des Energiespeichers, insbesondere und/oder Anode und bevorzugt ist das Glaspulver in die Elektrode integriert oder auf deren Oberfläche aufgebracht.

Bei einem bevorzugten elektrochemischen Energiespeicher ist das Glaspulver in dem Elektrolyten des Energiespeichers enthalten, insbesondere in einem Feststoffelektrolyten und/oder einem Flüssigelektrolyten.

Als erfindungsgemäße bevorzugte Lösung wird auch der Einsatz eines funktionellen, glasigen oder glasführenden oder keramischen pulverförmigen Zusatzstoffes einer Lithium-lonenzelle beschreiben. Bevorzugt bindet der Bestandteil schädliches Fluorid chemisch. Weiterhin wird Wasser chemisch gebunden und es wird weiterhin die Entstehung von HF unterbunden. Die Bindung von HF und Wasser findet unter Standzeiten als auch unter Potentiallast statt. Die Abgabe von Oberflächenwasser des Zusatzstoffes ist zusätzlich minimal.

Der elektrochemische Energiespeicher enthält ein Glaspulver, das folgenden Zusammensetzungsbereich (in Gew.-%) aufweist. Das molare Verhältnis von Erdalkalimetalloxid zu Siliciumdioxid liegt im Bereich von ≤ 0,65 1,0.

### Zusammensetzungsbereich 1:

| | |
|---|---|
| SiO₂ | 15 - 75 |
| BaO | 0 - 80 |
| ZrO₂ | 0 - 15 |
| Li₂O | 0 - 25 |
| P₂O₅ | 0 - 15 |
| Al₂O₃ | 0 - 10 |
| CaO | 0 - 30 |
| MgO | 0 - 30 |
| MgO+BaO+CaO | ≥ 20 |
| NiO | 0 - 10 |
| PbO | 0 - 10 |
| ZnO | 0 - 10 |
| F | 0 - 5 |

Besonders bevorzugt enthält der elektrochemische Energiespeicher ein Glaspulver, das folgende Zusammensetzungsbereiche (in Gew.-%) aufweist:

### Zusammensetzungsbereich 2:

| | |
|---|---|
| SiO₂ | 15 - 45 |
| BaO | 10 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO+BaO+CaO | ≥ 30 |
| NiO | 0 - 10 |
| PbO | 0 - 10 |
| ZnO | 0 - 10 |
| F | 0 - 5 |

### Zusammensetzungsbereich 3:

| | |
|---|---|
| SiO₂ | 15 - 45 |
| BaO | 10 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO+BaO+CaO | ≥ 40 |
| NiO | 0 - 10 |
| PbO | 0 - 10 |
| ZnO | 0 - 10 |
| F | 0 - 5 |

### Zusammensetzungsbereich 4:

| | |
|---|---|
| SiO₂ | 15 - 45 |
| BaO | 50 - 80 |
| ZrO₂ | 0 - 15 |
| Li₂O | 0 - 25 |
| P₂O₅ | 0 - 20 |
| Al₂O₃ | 0 10 |
| NiO | 0 - 10 |
| PbO | 0 - 10 |
| ZnO | 0 - 10 |
| F | 0 - 5 |

### Zusammensetzungsbereich 5:

| | |
|---|---|
| SiO₂ | 15 - 45 |
| BaO | 50 - 80 |
| ZrO₂ | 0 - 15 |

Hinzugegeben werden können bei allen Zusammensetzungsbereichen 1 bis 5 Läutermittel in üblichen Mengen von bis zu 2 Gew.-%.

Als übliche Läutermittel können SnO₂ As₂O₃, Sb₂O₃, Schwefel, CeO₂ etc. eingesetzt werden. Insbesondere wenn polyvalente Läutermittel unumgänglich sind, sollte deren Anteil aus Gründen der elektrochemischen Stabilität möglichst gering, idealerweise unterhalb 500 ppm, gehalten werden. Grundsätzlich kann auf Läutermittel gegebenenfalls vollständig verzichtet werden, sofern das Glas applikationsnah, d.h. als feines Pulver hergestellt wird und der Anspruch auf die Blasenfreiheit nicht hoch ist.

Auch folgende nachstehende Elemente sollten, selbst wenn sie nicht in den Elektrolyten ausgelaugt werden können, in möglichst geringen Mengen
< 1000 ppm, bevorzugt < 500 ppm, besonders bevorzugt < 150 ppm im Glaspulver enthalten sein: Fe, Ni, Cu, Bi.

Entscheidend sind Glaszusammensetzungen, die zusammen mit dem Elektroylten SiF₆-Verbindungen bilden. Demzufolge ist Silicium grundsätzlich notwendig im Glas, sollte aber gut ausbalanciert sein mit anderen Glas-komponenten. Um bestmögliche Schmelzbarkeit verbunden mit geringst-möglicher Kristallisationsneigung und hoher Glashomogenität einzustellen ist ein MO/SiO₂-Verhältnis, bevorzugt ein BaO/SiO₂-Verhältnis, von 0,65 bis ≤ 1,0 zu gewährleisten. Bevorzugt ist dies verbunden mit nicht zu hohen SiO₂-Gehalten < 75 Gew.-%, besonders bevorzugt < 50 Gew.-%, ganz besonders bevorzugt sind sogar Gehalte < 40 Gew.-%. Von Vorteil für eine gute wirtschaftliche Herstellbarkeit ist beispielsweise die Zugabe von Li₂O und/oder P₂O₅.

Bei den weiter oben genannten SiF₆-Verbindungen, die gemäß der Erfindung gebildet werden, handelt es sich um schwerlösliche Erdalkali-Hexafluorosilikate. Jegliche Bildung von entsprechenden Lithium-Salzen, wie beispielsweise in JP 2005-011614 A beschrieben, ist unerwünscht im Sinne der Anwendung, da so dem System Lithium entzogen wird, das entsprechend nicht mehr zur Energiespeicherung genutzt werden kann. In der JP 2005-011614 A wird Lithium bewusst demobilisiert im Falle eines abnormen Zellverhaltens.

Die vorliegende Erfindung stellt also einen Energiespeicher mit einem nicht toxischen, temperatur-stabilen anorganischen Zusatzstoff (Festkörper-Additiv) zum flexiblen Einsatz in allen Bereichen eines Energiespeichers, z.B. einer wiederaufladbaren Lithiumionenzelle, bereit, um deren Einsatz langlebiger zu machen. Insbesondere stellt die Erfindung eine Funktionalität zur Bindung von schädlichem HF und Wasser in einem Energiespeicher bereit, welche die beeinflussenden Faktoren einer Zellalterung darstellen. Die Bindung erfolgt im Energiespeicher bei angelegtem Potential als auch während Standzeiten. Weiterhin gibt das zugesetzte Glaspulver viel weniger Oberflächenwasser ab, verglichen zu den anderen im Energiespeicher eingesetzten Materialien.

Der Energiespeicher mit dem vorstehend beschriebenen Zusatzstoff kann auch folgendermaßen ausgebildet sein:
1. Als Energiespeicher in Form von langlebigen, wiederaufladbaren Lithium-Ionen-Zellen, bei denen der Zusatzstoff als pulverförmiger, anorganischer, fester, glasiger oder glaskeramischer oder keramischer Additiv-Bestandteil ausgebildet ist, der aktiv auf die Zellchemie Einfluss nimmt durch
   a) reversible Oberflächenwirkung bzw.
   b) irreversible chemische Wirkung;
2. wiederaufladbare Lithium-Ionen-Zelle, bei welcher der Zusatzstoff einen pulverförmigen, festen glasigen oder glaskeramischen oder keramischen Additiv-Bestandteil aufweist, welcher Fluorid chemisch bindet, oder welcher Wasser (chemisch) bindet, oder
   welcher Oberflächenwasser nicht an den Elektrolyten abgibt;
3. LIB-Zelle, bei welcher der Zusatzstoff als Glaspulver freies Fluor bzw. HF unter Potentiallast und Standzeiten abfängt;
4. LIB-Zelle, bei welcher der Zusatzstoff als Glaspulver freies H₂O unter Potentiallast und Standzeiten abfängt;
5. LIB-Zelle, bei welcher der Zusatzstoff als Glaspulver freies Fluor bzw. HF abfängt unter Bildung von elektrolytunlöslicher Barium-Spezies;
6. LIB-Zelle, bei welcher der Zusatzstoff als Glaspulver im Bereich des Separators integriert bzw. Bestandteil eines Separators ist;
7. LIB-Zelle, bei welcher der Zusatzstoff als Füllstoff oder als ein Beschichtungsmaterial eines infiltrierten bzw. keramisch beschichteten Separators fungiert;
8. LIB-Zelle, bei welcher der Zusatzstoff als Glaspulver Bestandteil einer Füllstoffmischung ist;
9. LIB-Zelle, bei welcher der Zusatzstoff als Glaspulver Bestandteil einer Füllstoffmischung zusammen mit Al₂O₃, Al(OH)₃, SiO₂ ZrO₂ Mg(OH)₂, TiO₂, BaTiO₃ oder eines anderen elektrolytstabilen Glases ist;
10. LIB-Zelle, bei welcher der Zusatzstoff als Glaspulver Bestandteil eines Kathodenverbundes (LCO, NMC, LFP o.ä.) ist;
11. LIB-Zelle, bei welcher der Zusatzstoff als Glaspulver Bestandteil eines Anodenverbundes (C, Si, Sn o.ä.) ist;.
12. LIB-Zelle, bei welcher der Zusatzstoff als Glaspulver Bestandteil eines Flüssigelektrolyten ist.

Das Glaspulver als Zusatzstoff ist in den Ausführungsbeispielen AB 1 bis AB 28 dargestellt. Bei den Ausführungsbeispielen AB 1, AB 26, AB 27 und AB 28 handelt es sich um nicht erfindungsgemäße Vergleichsbeispiele. Das Glaspulver wurde in einen Batterieelektrolyten gegeben und bei 60°C sieben Tage lang stehen gelassen. Nach Abtrennen des Elektrolyts und Trocknen des Materials kann das (z.B. an der Oberfläche des Glaspulvers) entstandene BaSiF₆ mittels XRD (Röntgenpulverdiffraktometrie), alternativ und im Falle der Bildung von nicht-kristalliner Phase auch EDX und SEM nachgewiesen werden.

Zusammensetzungen, bei denen BaSiF₆ detektiert wurde (Tabelle 1):
VB 1 Vergleichsbeispiel 100 % Al₂O₃
n.b. nicht bestimmt

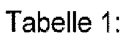

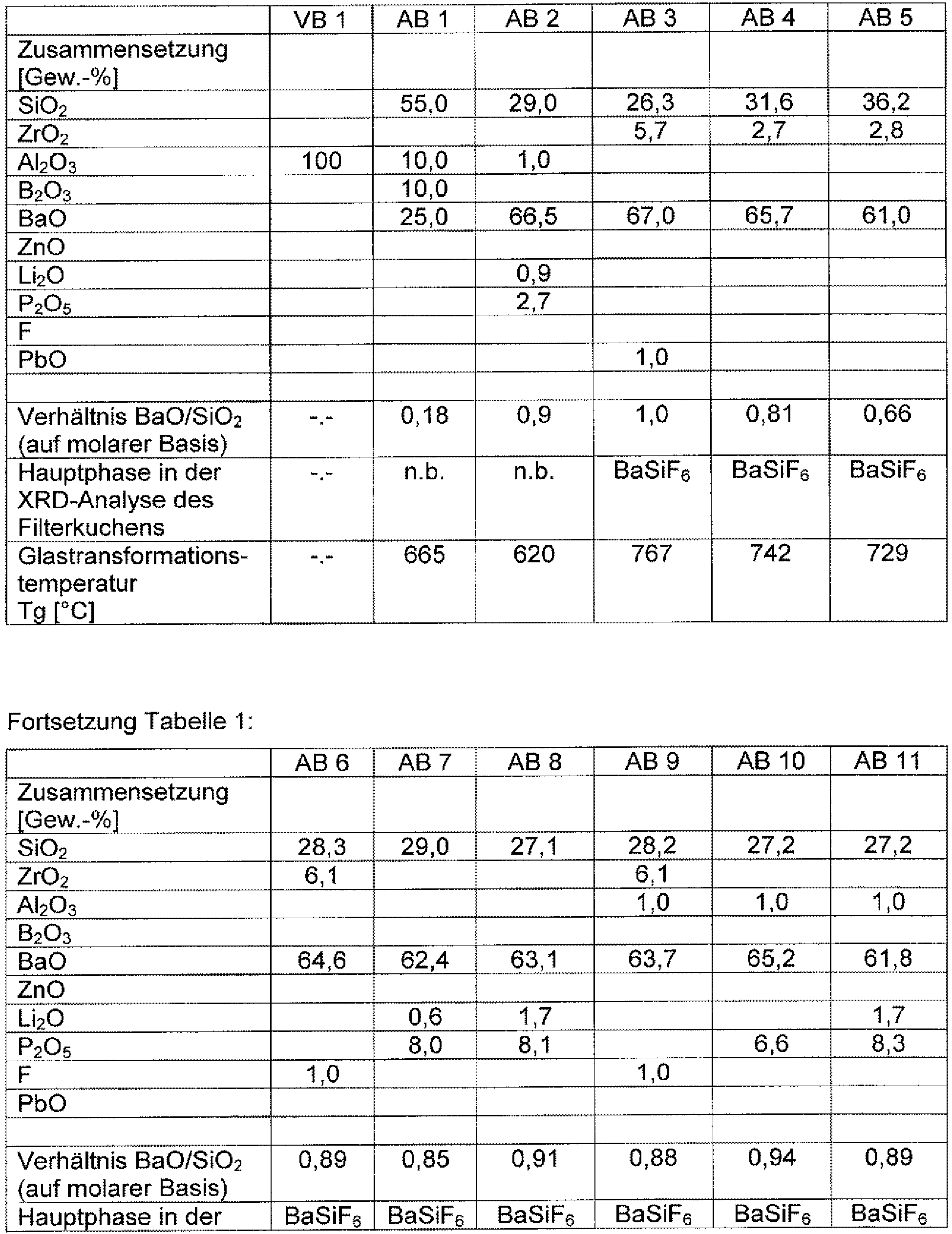

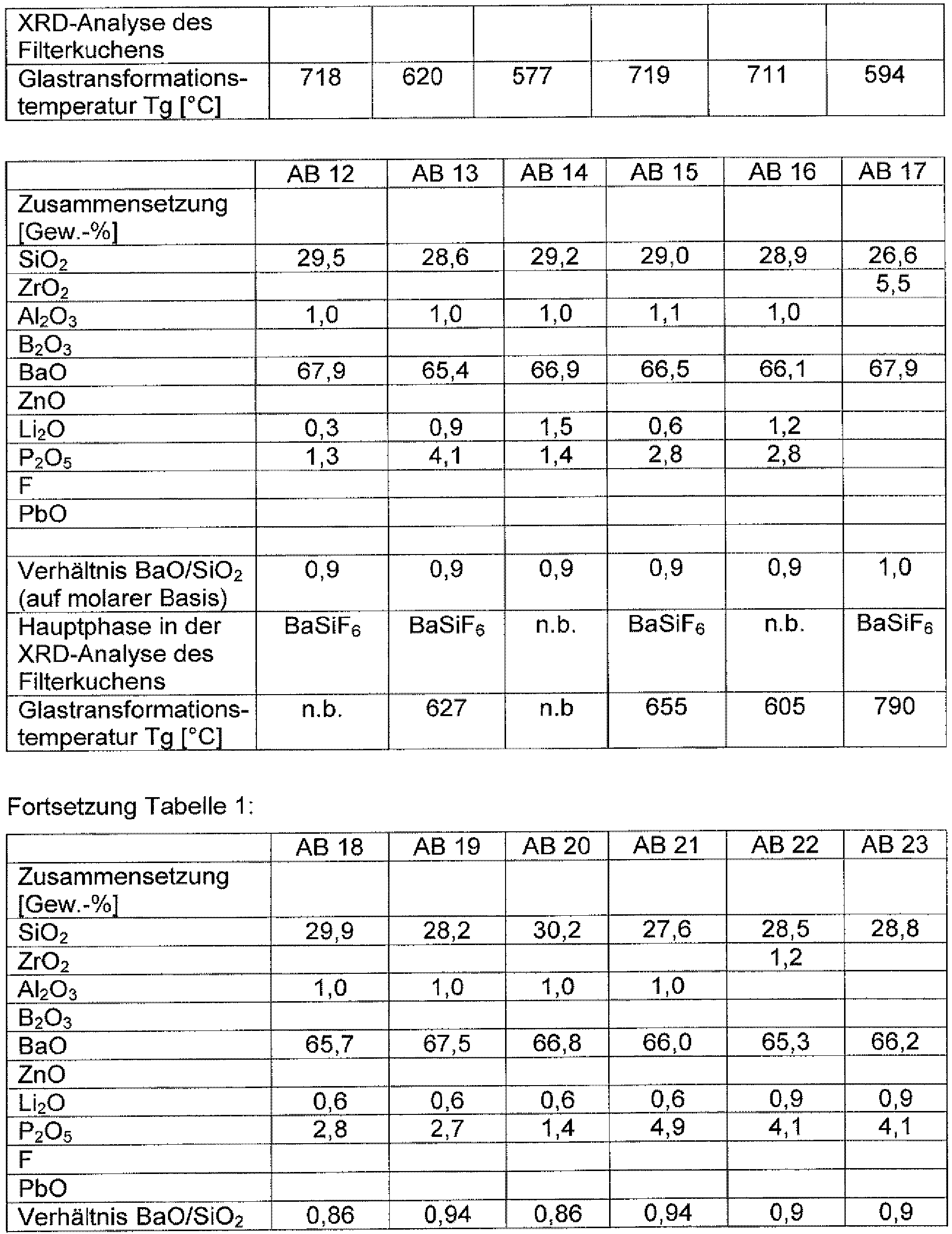

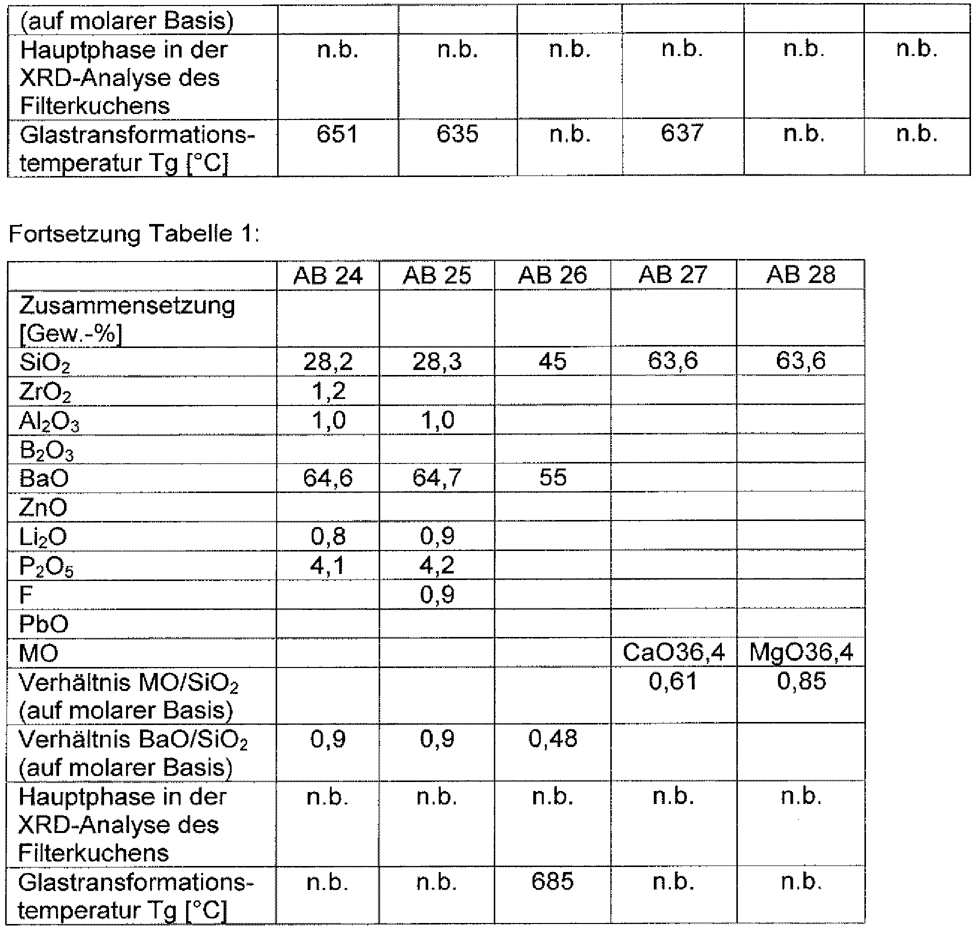

Beim verwendeten Elektrolyt handelt es sich im Wesentliche um eine Mischung eines oder mehrerer nicht-wässriger, bevorzugt carbonatischer Lösungsmittel und mindestens einem fluoridischen Leitsalz. Bevorzugt wurde LiPF₆ als Leitsalz verwendet.

Als Lösungsmittel kommen beispielhaft in Frage:
Propylencarbonat (PC), Ethylencarbonat (EC), Butylencarbonate (BC), Dimethylcarbonat (DMC), Diethylcarbonat (DEC), Vinylenecarbonat (VC), Methylethylcarbonat (EMC), 1, 2- Dimethoxyethan (DME), 1, 2-Diethoxyethan (DEE), γ-Butyrolacton (γ- BL), Sulfolan, Acetonitril, N-Methyl-2-pyrrolidon (NMP), Dimethylsulfoxid (DMSO), Ethylacetat (EA), 1,3-Dioxolan (DOL), Tetrahydrofuran (THF), Tetra(ethylen glycol)-dimethylether (TEGDME), Tri(ethylen glycol)dimethyl (TEGD). Grundsätzlich bevorzugt ist die Verwendung von PC, EC, γ- BL, DMC, DEC, EMC oder DME.

Die Lösungsmittel können alleine oder als geeignete Mischungen verwendet werden. Beispielhafte Mischungen sind EC/DMC im Verhältnis 50/50 (Gew.-%) oder Elektrolytmischungen mit Verhältnis EC zu (DMC+EMC) < 1 LiPF₆ kann alleine oder in Kombination mit anderen Leitsalzen verwendet werden. Letztere umfassen beispielhaft LiBF₄, LiAsF₆, LiClO₄, LiB (C₆H₅)₄, Li CH₃SO₃, Li CF₃SO₃, Li N (SO₂ CF₃)₂, Li C (SO₂ CF₃)₃, LiAlCl₄, LiSiF₆, Li [(OCO)₂]₂ B, LiDFOB, LiCI, and LiBr.

Die Konzentration von LiPF₆ bzw. Leitsalzmischungen gegenüber den nichtwässrigen Lösungsmitteln ist nicht limitiert, sollte aber bevorzugt in folgendem Rahmen bleiben: 0,1 M (mol/dm³) bis 5,0 M, bevorzugt 0,5 M bis 3,0 M.

Beispielhaft hat der aus Lösemittel und Leitsalz bestehende Elektrolyt folgende Zusammensetzung:
1 Mol LiPF₆ in EC/DMC 1:1 (Gew.-%)

Die Erfindung soll durch folgende Ausführungsbeispiele besser verdeutlicht werden.

Das Glaspulver AB 17 hat folgende Zusammensetzung in Mol-%:
SiO₂: 47,5
BaO: 47,5
ZrO₂: 5

### Beispiel 1:

Das anorganische Material (a: Al₂O₃ BET-Oberfläche 7 bis 8 m2/g, Korngröße D50, Reinheit für Batterien; b: AB17 BET-Oberfläche 7 bis 8 m2/g, Korngröße D50, Reinheit für Batterien) bringt bei der Integration in die LIB-Zelle gleich viel Oberflächenwasser (2000 - 3000 ppm) in das System ein. Dieses wird von Material b in geringstem Maße in die Zelle insbesondere den Elektrolyten verglichen zu den Elektrodenmaterialien abgegeben. Diese kann durch die Cyclovoltammetrie (CV) sichtbar gemacht werden:
Das jeweilige Material wird nach der Trocknung in die Prüfzelle bestehend aus zwei Pt-Elektroden als Gegenelektrode und Arbeitselektrode, welche unbeschichtet ist, eingebracht.

In den Cyclovoltammogrammen deutet der Peak bei 2,2 V auf die Existenz von freiem Wasser in der Zelle hin. Dieser ist bei Material a und b im ersten Zyklus nicht vorhanden. Im weiteren Verlauf des Versuches (Zyklus 5 und 10) ist ein geringer Wasser-Peak bei Material a und weiterhin keiner bei Material b detektiert.

### Beispiel 2:

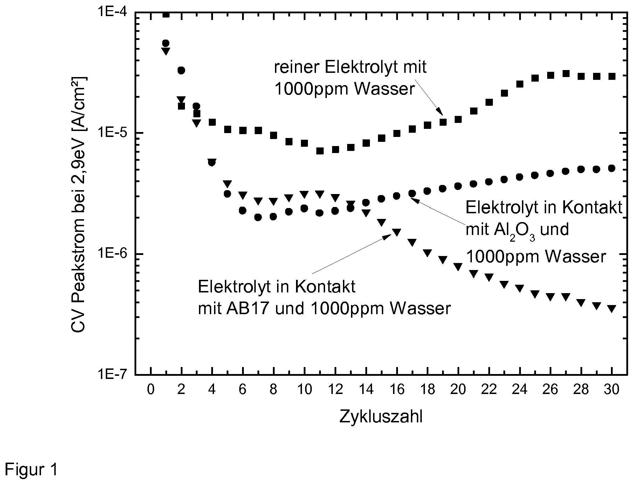

Materialien a und b werden mit einem Gemisch aus Elektrolyt und Wasser versetzt, um die Bildung von schädlichen HF zu verstärken und mittels Cyclovoltammetrie untersucht. Referenz ist ein Elektrolyt (Ethylencarbonat: Dimethylcarbonat (1:1) mit 1 mol/L LiPF₆) ohne Zugabe eines anorganischen Materials. Der Effekt der HF-Bindung wird durch die Auswertung eines für HF charakteristischen Peaks bei 2,9 V im Cyclovoltagramm dokumentiert. Die Abnahme der HF-Konzentration zeigt sich unter Potentiallast für beide Materialien, a und b, während im System Elektrolyt mit Wasser die HF-Menge gegen Ende des Versuches sogar ansteigt (siehe Figur 1).

Zu den jeweiligen o.g. CV-Messungen wurde im nächsten Schritt noch das Kathodenmaterial LiMn₂O₄ (LMO) hinzugefügt. LMO wird durch die Reaktion mit HF zerstört, Mn aus dem Kristallverbund herausgelöst. Die Auswertung der CV-Daten (Auftragung der Peakhöhen) zeigt auch hier, dass die anorganischen Füllermaterialien neben einem Elektrodenmaterial HF gettern. Nach der CV-Messung wurde die überstehende Lösung auf Mn²⁺ mittels ICP-OES unter-sucht. Hier zeigt sich, dass in der Probe mit Material b deutlich weniger Mn aus dem Kathodenmaterial ausgelaugt ist im Vergleich zu Material a und dem System ohne anorganisches Additiv.

Mn²⁺-Gehalt in mg/l in mit Wasser angefeuchtetem Elektrolyt nach 25 Zyklen (bestimmt mit ICP-OES)

| | |
|---|---|
| Elektrolyt | 40 |
| Elektrolyt + Al₂O₃ | 40 |
| Elektrolyt + AB17 | 20 |

Weiterhin setzt die Getterwirkung des Materials b erst nach einer gewissen Zeit ein (in CV weiteres deutliches Absinken des HF-Peaks nach 5 Zyklen). Dieses ist notwendig da während der Formierung einer LIB-Zelle geringe Mengen HF benötigt werden um den SEI zu bilden, als auch den Al-Stromsammler der Kathode zu passivieren.

Für die kalendarische Identifikation der HF-Getterung wurden Material a und b 7 Tage in angefeuchtetem Elektrolyt gelagert und anschließend mittels lonenchromatographie der Fluorid-Gehalt bestimmt. Material b bindet deutlich HF während Standzeiten.

F-Gehalt in mg/l (kalendarischer Effekt) in mit 1500 ppm Wasser angefeuchtetem Elektrolyt nach 7 Tagen

| | | |
|---|---|---|
| Elektrolyt | 1300 ± 130 | 87 %(entspricht 1300ppm) 13 % gegettert |
| Elektrolyt + Al₂O₃ | 1500 ± 150 | 100 %(entspricht 1500ppm) 0 % gegettert |
| Elektrolyt + AB17 | 900 ± 100 | 60 % (entspricht 900ppm) 40 % gegettert |

### Beispiel 3:

Bei Zugabe von zusätzlichem Wasser in eine LIB-Zelle binden Material a und b Wasser aus dem System. Dieses erfolgt sowohl unter Potentiallast als auch innerhalb von Standzeiten.

Der kalendarische Effekt wurde detektiert: ein Elektrolyt aus EC:DMC mit 1 M LiClO₄ (unterbinden einer Reaktion des Anions mit Wasser zu HF) und 1000 ppm Wasser wird mit den anorganischen Materialien a und b verwischt.
Nach 7 Tagen Standzeit wird die Rest-Wassermenge mittels Karl-Fischer-Titration bestimmt. Beide Materialien entziehen dem Elektrolyt Wasser.

H₂O-Gehalt in mg/kg Lösemittel (kalendarischer Effekt) in mit 1500 ppm Wasser angefeuchtetem Elektrolyt nach 7 Tagen

| | | |
|---|---|---|
| Elektrolyt | 997±10 | 100 %(entspricht 997ppm) 0 % gegettert |
| Elektrolyt + Al₂O₃ | 917±10 | 92 %(entspricht 917ppm) 8 % gegettert |
| Elektrolyt + AB17 | 894±10 | 89 %(entspricht 894ppm) 11 % gegettert. |

Ausführungsbeispiel für einen elektrochemischen Energiespeicher der als Zusatzstoff wenigstens eine silicium- und erdalkalimetallhaltige Verbindung V1 enthält, die in Kontakt mit einer fluorhaltigen Verbindung im Energiespeicher wenigstens eine Verbindung V3 bildet, wobei die Verbindung V3 eine fluorhaltige, lithiumfreie Erdalkaliverbindungen V3b, in diesem Fall BaF₂ ist.

Ein mit dem Zusatzstoff (Glaspulver) beschichteter Separator wurde in Kathodenhalbzellen (Li/LP301Glas-Polyethylen Separator/LP30/Kathoden-material; 1) LithiumManganOxid(LMO) 2) LithiumNickelCobaltManganOxid (NCM)) für Batterietest eingebaut. Es wurden Swaglok-Zellen für den Versuch verwendet mit einer Lithium-Referenz. Es wurde nach einem CC-CV Protokoll zyklisiert. Zu Beginn werden 5 Formierungszyklen bei einem Strom für C/10 (entspricht einem Lade-, bzw. Entladeschritt von 10 h) durchgeführt, anschließend werden die Zellen mit einem Strom von 1 C (entspricht der Zeit von 1 h) geladen und entladen. Der Spannungsbereich lag bei 3,0 bis -4,4 V. Nach 60 Zyklen wurden die Zelle auseinander gebaut und die Separatorbeschichtung mit XRD untersucht. Hierbei zeigte sich, dass sich BaF₂ bildete. Der Elektrolyt LP30 [EC:DMC (1:1)+1mol/L LiPF6] war trocken (H₂O < 20 ppm).

Das verwendete Glaspulver hatte folgende Zusammensetzung in Mol-%:
SiO₂: 47,5
BaO: 47,5
ZrO₂: 5

## Patentansprüche

1. Elektrochemischer Energiespeicher, insbesondere Lithium-Ionen-Zelle, mit einer Anode, einer Kathode, einem Separator und mit wenigstens einem Zusatzstoff, **dadurch gekennzeichnet, dass**
der Zusatzstoff wenigstens eine silicium- und erdalkalimetallhaltige Verbindung V1 enthält, die in Kontakt mit einer fluorhaltigen Verbindung V2 im Energiespeicher wenigstens eine Verbindung V3 bildet, wobei die Verbindung V3 ausgewählt ist aus der Gruppe der silicium- und fluorhaltigen, lithiumfreien Verbindungen V3a, der erdalkalimetall- und fluorhaltigen, lithiumfreien Verbindungen V3b, der silicium-, erdalkalimetall- und fluorhaltigen, lithiumfreien Verbindungen V3c oder Kombinationen davon, wobei die Verbindung V1 ein Glaspulver ist, das die folgenden Glaszusammensetzungsbestandteile aufweist (in Gew.-%):
| | |
|---|---|
| SiO₂ | 15 - 75 |
| BaO | 0 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO+BaO+CaO | ≥ 20 |
| NiO | 0 - 10 |
| PbO | 0 - 10 |
| ZnO | 0 - 10 |
| F | 0 - 5, wobei das molare Verhältnis von |
| Erdalkalimetalloxid zu Siliciumdioxid im Bereich von 0,65 bis ≤ 1,0 liegt. | |

2. Energiespeicher nach Anspruch 1, **dadurch gekennzeichnet,**
**dass**
SiO₂ > 40 bis < 70,
MO > 30 bis < 60,
wobei M ausgewählt ist aus der Gruppe der Erdalkalimetallelemente.

3. Energiespeicher nach Anspruch 1,
**dadurch gekennzeichnet,**
**dass** die Verbindung V1 ein Glaspulver ist, das folgende Glaszusammensetzungsbestandteile aufweist (in Gew.-%):
| | |
|---|---|
| SiO₂ | 15 - 45 |
| BaO | 10 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO+BaO+CaO | ≥ 30 |
| NiO | 0 - 10 |
| PbO | 0 - 10 |
| ZnO | 0 - 10 |
| F | 0 - 5 |

4. Energiespeicher nach Anspruch 1,
**dadurch gekennzeichnet,**
**dass** die Verbindung V1 ein Glaspulver ist, das folgende Glaszusammensetzungsbestandteile aufweist (in Gew.-%):
| | |
|---|---|
| SiO₂ | 20 - 40 |
| BaO | 40 - 80 |
| ZrO₂ | 0 - 8 |
| Li₂O | 0 - 15 |
| P₂O₅ | 0 - 15 |
| Al₂O₃ | 0 - 10 |
| CaO | 0 - 30 |
| MgO | 0 - 30 |
| MgO+BaO+CaO | ≥ 30 |
| NiO | 0 - 10 |
| PbO | 0 - 10 |
| ZnO | 0 - 10 |
| F | 0 - 5 |

5. Energiespeicher nach einem der vorhergehenden Ansprüche,
**dadurch gekennzeichnet,**
**dass** die Verbindung V3a oder die Verbindung V3c [SiF₆]²⁻-Gruppen enthält.

6. Energiespeicher nach einem der vorhergehenden Ansprüche,
**dadurch gekennzeichnet,**
**dass** die Verbindung V3b oder die Verbindung V3c MSiF₆ enthält, wobei M wenigstens ein Erdalkalimetallelement ist, insbesondere Barium.

7. Energiespeicher nach einem der vorhergehenden Ansprüche,
**dadurch gekennzeichnet,**
**dass** die Verbindung V3b oder die Verbindung V3c MF₂ enthält, wobei M wenigstens ein Erdalkalimetallelement ist, insbesondere Barium.

8. Energiespeicher nach einem der vorhergehenden Ansprüche,
**dadurch gekennzeichnet,**
**dass** der Zusatzstoff Bestandteil einer Elektrode, eines Elektrolyten oder eines Separators eines Energiespeichers ist.

9. Energiespeicher nach einem der vorhergehenden Ansprüche,
**dadurch gekennzeichnet,**
**dass** der Zusatzstoff wenigstens eine silicium- und erdalkalimetallhaltige Verbindung V1 enthält, die in Kontakt mit HF im Energiespeicher wenigstens die Verbindung V3 bildet.

10. Energiespeicher nach einem der vorhergehenden Ansprüche,
**dadurch gekennzeichnet,**
**dass** der Elektrolyt ein nicht-wässriger Elektrolyt und/oder ein Elektrolyt auf Basis carbonatischer Lösungsmittel ist und/oder, dass der Elektrolyt mindestens LiPF₆ als ein Leitsalz enthält.

## Claims

1. An electrochemical energy storage, in particular a lithium ion cell, comprising an anode, a cathode, a separator, and at least one additive, **characterized in that** the additive contains at least one silicon- and alkaline earth metal-containing compound V1 which in contact with a fluorine-containing compound V2 in the energy storage forms at least one compound V3 selected from the group consisting of silicon- and fluorine-containing, lithium-free compounds V3a, alkaline earth metal- and fluorine-containing, lithium-free compounds V3b, silicon-, alkaline earth metal- and fluorine-containing, lithium-free compounds V3c and combinations thereof, wherein the additive V1 is a glass powder comprising the following glass composition constituents (in % by weight):
| | |
|---|---|
| SiO₂ | 15 - 75 |
| BaO | 0 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO + BaO + CaO | ≥ 20 |
| NiO | 0 - 10 |
| PbO | 0 - 10 |
| ZnO | 0 - 10 |
| F | 0 - 5, |
wherein the molar ratio of alkaline earth metal oxide to silicon dioxide is in the
range from 0.65 to ≤ 1.0.

2. The additive of claim 1, **characterized in that**
SiO₂ 40 to < 70,
MO > 30 to < 60,
wherein M is selected from the group consisting of the alkaline earth metal elements.

3. The additive of claim 1, **characterized in that** the compound V1 is a glass powder comprising the following glass composition constituents (in % by weight):
| | |
|---|---|
| SiO₂ | 15 - 45 |
| BaO | 10 - 80 |
| ZrO₂ | 0 - 15 |
| Li₂O | 0 - 25 |
| P₂O₅ | 0 - 20 |
| Al₂O₃ | 0 - 10 |
| CaO | 0 - 30 |
| MgO | 0 - 30 |
| MgO + BaO + CaO | ≥ 30 |
| NiO | 0 - 10 |
| PbO | 0 - 10 |
| ZnO | 0 - 10 |
| F | 0 - 5 |

4. The additive of claim 1, **characterized in that** the compound V1 is a glass powder comprising the following glass composition constituents (in % by weight):
/
| | |
|---|---|
| SiO₂ | 20 - 40 |
| BaO | 40 - 80 |
| ZrO₂ | 0 - 8 |
| Li₂O | 0 - 15 |
| P₂O₅ | 0 - 15 |
| Al₂O₃ | 0 - 10 |
| CaO | 0 - 30 |
| MgO | 0 - 30 |
| MgO + BaO + CaO | ≥ 30 |
| NiO | 0 - 10 |
| PbO | 0 - 10 |
| ZnO | 0 - 10 |
| F | 0 - 5 |

5. The additive of any of the preceding claims, **characterized in that** the compound V3a or the compound V3c contains [SiF₆]²⁻ groups.

6. The additive of any of the preceding claims, **characterized in that** the compound V3b or the compound V3c contains MSiF₆, where M is at least one alkaline earth metal element, in particular barium.

7. The additive of any of the preceding claims, **characterized in that** the compound V3b or the compound V3c contains MF₂, where M is at least one alkaline earth metal element, in particular barium.

8. The additive of any of the preceding claims, **characterized in that** the additive is a constituent of an electrode, an electrolyte or a separator of an energy storage.

9. The additive of any of the preceding claims, **characterized in that** the additive contains at least one silicon- and alkaline earth metal-containing compound V1 which in contact with HF in the energy storage forms at least the compound V3.

10. The energy storage of any of the preceding claims, **characterized in that** the electrolyte is a nonaqueous electrolyte and/or an electrolyte based on carbonate solvents and/or **in that** the electrolyte contains at least LiPF₆ as a leading salt.

## Revendications

1. Accumulateur d'énergie électrochimique, notamment cellule lithium-ion, comprenant une anode, une cathode, un séparateur et comprenant au moins un additif, **caractérisé en ce que**
l'additif contient au moins un composé contenant du silicium et un métal alcalino-terreux V1, qui au contact d'un composé contenant du fluor V2 dans l'accumulateur d'énergie forme au moins un composé V3, le composé V3 étant choisi dans le groupe constitué par les composés contenant du silicium et du fluor, exempts de lithium V3a, les composés contenant un métal alcalino-terreux et du fluor, exempts de lithium V3b, les composés contenant du silicium, un métal alcalino-terreux et du fluor, exempts de lithium V3c ou leurs combinaisons, le composé V1 étant une poudre de verre qui comprend les constituants de composition de verre suivants (en % en poids) :
| | |
|---|---|
| SiO₂ | 15 à 75 |
| BaO | 0 à 80 |
| ZrO₂ | 0 à 15 |
| Li₂O | 0 à 25 |
| P₂O₅ | 0 à 20 |
| Al₂O₃ | 0 à 10 |
| CaO | 0 à 30 |
| MgO | 0 à 30 |
| MgO + BaO + CaO | ≥ 20 |
| NiO | 0 à 10 |
| PbO | 0 à 10 |
| ZnO | 0 à 10 |
| F | 0 à 5, le rapport molaire entre l'oxyde de métal alcalino-terreux et le dioxyde de silicium se situant dans la plage allant de 0,65 à ≤ 1,0. |

2. Accumulateur d'énergie selon la revendication 1, **caractérisé en ce que**
SiO₂ > 40 à < 70,
MO > 30 à < 60,
M étant choisi dans le groupe des éléments métaux alcalino-terreux.

3. Accumulateur d'énergie selon la revendication 1, **caractérisé en ce que** le composé V1 est une poudre de verre, qui comprend les constituants de composition de verre suivants (en % en poids) :
| | |
|---|---|
| SiO₂ | 15 à 45 |
| BaO | 10 à 80 |
| ZrO₂ | 0 à 15 |
| Li₂O | 0 à 25 |
| P₂O₅ | 0 à 20 |
| Al₂O₃ | 0 à 10 |
| CaO | 0 à 30 |
| MgO | 0 à 30 |
| MgO + BaO + CaO | ≥ 30 |
| NiO | 0 à 10 |
| PbO | 0 à 10 |
| ZnO | 0 à 10 |
| F | 0 à 5. |

4. Accumulateur d'énergie selon la revendication 1, **caractérisé en ce que** le composé V1 est une poudre de verre, qui comprend les constituants de composition de verre suivants (en % en poids) :
| | |
|---|---|
| SiO₂ | 20 à 40 |
| BaO | 40 à 80 |
| ZrO₂ | 0 à 8 |
| Li₂O | 0 à 15 |
| P₂O₅ | 0 à 15 |
| Al₂O₃ | 0 à 10 |
| CaO | 0 à 30 |
| MgO | 0 à 30 |
| MgO + BaO + CaO | ≥ 30 |
| NiO | 0 à 10 |
| PbO | 0 à 10 |
| ZnO | 0 à 10 |
| F | 0 à 5. |

5. Accumulateur d'énergie selon l'une quelconque des revendications précédentes, **caractérisé en ce que** le composé V3a ou le composé V3c contient des groupes [SiF₆]²⁻.

6. Accumulateur d'énergie selon l'une quelconque des revendications précédentes, **caractérisé en ce que** le composé V3b ou le composé V3c contient MSiF₆, M étant au moins un élément métal alcalino-terreux, notamment le baryum.

7. Accumulateur d'énergie selon l'une quelconque des revendications précédentes, **caractérisé en ce que** le composé V3b ou le composé V3c contient MF₂, M étant au moins un élément métal alcalino-terreux, notamment le baryum.

8. Accumulateur d'énergie selon l'une quelconque des revendications précédentes, **caractérisé en ce que** l'additif est un constituant d'une électrode, d'un électrolyte ou d'un séparateur d'un accumulateur d'énergie.

9. Accumulateur d'énergie selon l'une quelconque des revendications précédentes, **caractérisé en ce que** l'additif contient au moins un composé contenant du silicium et un métal alcalino-terreux V1, qui au contact avec HF dans l'accumulateur d'énergie forme au moins le composé V3.

10. Accumulateur d'énergie selon l'une quelconque des revendications précédentes, **caractérisé en ce que** l'électrolyte est un électrolyte non aqueux et/ou un électrolyte à base d'un solvant carbonate et/ou **en ce que** l'électrolyte contient au moins Lippe en tant que sel conducteur.
